# EUROPÄISCHE PATENTANMELDUNG

(11) **EP 2 050 700 A1**
(43) Veröffentlichungstag der Anmeldung: **22.04.2009**
(21) Anmeldenummer: 07118723.1
(22) Anmeldetag: 17.10.2007
(51) Int. Cl.: B65H 19/12, B65H 19/30, B62B 3/04

(54) **Bahnrollen-Transportvorrichtung mit Kippsicherung**

(71) Anmelder: WIFAG Maschinenfabrik AG, 3001 Bern (CH)
(72) Erfinder: Schrag, Eric, 3303 Jegenstorf (CH)
(74) Vertreter: Schwabe - Sandmair - Marx

(57) **Zusammenfassung**

Transportvorrichtung für die Zuführung oder Abführung einer Bahnrolle (2) zu oder von einem Rollenwechsler einer Rollendruckmaschine, wobei die Transportvorrichtung einen Transportwagen (1) mit einer Auflage (3) und einer Kippsicherung (4) umfasst, die über die Auflage (3) ragt und im Falle einer auf der Auflage angeordneten Bahnrolle (2) einer Stirnseite der Bahnrolle (2) zugewandt ist.

## Beschreibung

Die Erfindung betrifft eine Transportvorrichtung für die Zuführung oder Abführung einer Bahnrolle zu oder von einem Rollenwechsler einer Rollendruckmaschine.

Aus dem Stand der Technik sind Transportvorrichtung zum Zu- oder Abführen einer Bahnrolle bekannt, die einen Transportwagen mit einer Auflage aufweisen. Die zu transportierenden Bahnrollen werden dabei so auf der Auflage des Transportwagens angeordnet, dass die Rotationsachse der Bahnrolle parallel zur Transportrichtung bzw. zur Bewegungsrichtung des Transportwagens verläuft. Um ein Herabrollen der Bahnrolle von der Auflage des Transportwagens zu vermeiden, weist die Auflage zumeist eine sich parallel zur Fahrtrichtung des Transportwagens erstreckende Ausnehmung auf, in welche der untere Teil einer Bahnrolle angeordnet ist. Durch die flächige oder zumindest zweifach linienhafte Berührungsfläche der Umfangsfläche der Bahnrolle mit der Auflage des Transportwagens verhindert somit ein Herabrollen der Bahnrolle senkrecht zur Bewegungsrichtung des Transportwagens, beispielsweise beim Durchfahren einer Kurve.

Weiterhin können jedoch auf die Bahnrolle positive oder negative Beschleunigungskräfte in Richtung der Rotationsachse der Bahnrolle wirken, wie beispielsweise beim Anfahren oder Abbremsen des Transportwagens. Da gewöhnliche Bahnrollen einen Rollendurchmesser von etwa 1.300 mm und eine Rollenbreite von etwa 120 mm (etwa 44 Zoll) aufweisen, können sie die auf sie wirkenden Beschleunigungskräfte auffangen, ohne dabei zu kippen. Entscheidend ist das Verhältnis von Rollenbreite zu Rollendurchmesser. Bei üblichen Bahnrollen ist dieses Verhältnis stets groß genug, um ein Kippen der Bahnrollen auf dem Transportwagen beim Abbremsen oder Beschleunigen des Transportwagens allein auf das Eigengewicht der Bahnrolle zu verhindern.

Probleme ergeben sich, wenn das Verhältnis von Rollenbreite zu Rollendurchmesser einen bestimmten Wert unterschreitet, wie dies bei Bahnrollen mit dem gewöhnlichen Rollendurchmesser, jedoch mit einer geringeren Rollenbreite der Fall ist. So kippen solche Bahnrollen sehr leicht beim Anfahren oder Abbremsen des Transportwagens auf der Auflage des Transportwagens um. Als Folge davon können die Bahnrollen Schaden nehmen, jedoch erfolgt zumindest eine Verzögerung im Produktionsablauf im Bereich einer Rollendruckmaschine.

Die Erfindung hat sich die Aufgabe gestellt, das Kippen einer auf einer Auflage eines Transportwagens angeordneten Bahnrolle, insbesondere beim Anfahren oder Abbremsen des Transportwagens zu verhindern.

Diese Aufgabe wird durch eine Transportvorrichtung gemäß dem Anspruch 1 gelöst. Die Unteransprüche offenbaren bevorzugte Ausführungsformen der Erfindung.

Die erfindungsgemäße Transportvorrichtung umfasst einen Transportwagen mit einer Auflage, wobei im Bereich der Auflage eine Kippsicherung angeordnet ist, die sich von der Auflage nach oben weg erstreckt. Sie ist weiterhin so angeordnet, dass sie an der Stirnseite der Bahnrolle zugeordnet ist bzw. sich im Bereich dieser erstreckt. Dabei kann die Kippsicherung nur auf einer Seite der Bahnrolle angeordnet sein und somit einer Stirnfläche zugewandt sein, es können jedoch auch auf beiden Seiten der Bahnrolle bzw. beiden Stirnflächen der Bahnrolle zugeordnete Kippsicherungen vorhanden sein. Auch ist es denkbar, dass auf einem Transportwagen mehrere Bahnrollen transportiert werden, wobei einzelne oder alle Stirnflächen der Bahnrollen mit einer Kippsicherung "abgesichert" werden. Insbesondere befindet sich an beiden Seiten einer Bahnrolle je eine ihr zugeordnete Kippsicherung.

Im folgenden wird auf eine Kippsicherung Bezug genommen, sei jedoch darauf hingewiesen, dass ein Transportwagen der oben genannten Art beliebig viele solcher Kippsicherungen aufweisen kann, wobei zumindest eine Kippsicherung ein oder mehrere hierin beschriebene Merkmale aufweisen kann.

Es ist denkbar, dass die Kippsicherung am Transportwagen ortsfest angeordnet ist. Sie kann dabei formschlüssig, wie etwa durch Einlegen in eine Aufnahme der Auflage, durch Nieten, Schrauben oder ähnliche Verbindungsmittel am Transportwagen angeordnet sein. Denkbar ist dabei aber auch eine reibschlüssige Verbindung, die die Kippsicherung am Transportwagen bindet.

Da die Kippsicherung ortsfest am Transportwagen angeordnet ist, muss die zu transportierende Bahnrolle relativ zur Kippsicherung und Transportwagen bewegt und platziert werden, so dass die Kippsicherung ihre Funktion an einer Stirnfläche der Bahnrolle wahrnehmen kann. Insbesondere bei zwei Kippsicherungen muss die Position der Kippsicherungen relativ zueinander auf die Bahnrollenbreite abgestimmt sein.

In einer bevorzugten Ausführungsform ist die Kippsicherung am Transportwagen verstellbar angeordnet, so dass bei mehreren Kippsicherungen auf einem Transportwagen die Relativposition der Kippsicherungen zueinander keine so große Rolle spielt. So kann die Kippsicherung im Bereich der Stirnseite der Bahnrolle schwenkbar oder verschiebbar angeordnet sein. Die Bewegungsrichtung der Kippsicherung kann ferner entlang der Stirnseite, d.h. parallel zu der Stirnseitenfläche erfolgen oder in Richtung auf die Stirnseite, d.h. mit einer senkrecht auf die Stirnseitenfläche stehenden Bewegungskomponente. Diese Bewegung kann dabei sowohl manuell, beispielsweise durch Muskelkraft von Personal oder aktivierten Antriebsmotoren bewirkt werden. Insbesondere bei Antriebsmotoren für die Verstellung der Kippsicherung ist auch eine automatisierte Verstellung denkbar, beispielsweise beim Be- und Entladen des Transportwagens mit Bahnrollen von verschiedenen Ausmaßen.

Ferner kann die Kippsicherung flächig auf der Stirnseite der Bahnrolle anliegen, wobei die auftretenden Kräfte beim Beschleunigen und Abbremsen des Transportwagens auf eine größere Oberfläche der Stirnseite verteilt werden, so dass ein Schadennehmen der Bahnrolle vermieden werden kann. Es ist jedoch ebenfalls denkbar, dass die Kippsicherung linienhaft, d.h. an einer oder mehrerer "Berührungslinien" an der Stirnseite der Bahnrolle anliegt.

Auch ist eine Kippsicherung vorstellbar, die nicht an der Stirnseite der Bahnrolle anliegt, sondern in einem gewissen Abstand, bevorzugterweise in einem geringen Abstand von dieser distanziert ist. Dabei wirken seitens der Kippsicherung keine Kräfte auf die Stirnseite der Bahnrolle, wobei nur im Falle des Kippens der Bahnrolle diese durch die Kippsicherung "aufgefangen" wird.

Ferner ist es denkbar, dass die Kippsicherung mit einer Kraft beaufschlagt wird, die eine Bewegung der Kippsicherung parallel zu einer Stirnseite der Bahnrolle oder mit einer senkrechten Komponente dazu bewirkt. Dafür sind Motoren, Federkräfte, hydraulisch oder pneumatische Kraftquellen ebenso denkbar wie beispielsweise die eigene Gewichtskraft der Bahnrolle, die etwa durch einen Hebelmechanismus beim Absenken der Bahnrolle auf dem Transportwagen eine Bewegung der Kippsicherung bewirkt.

Ferner kann auch während des Transports der Bahnrolle eine Kraft von der Kippsicherung auf die Bahnrolle ausgeübt werden, so dass ebenfalls eine Bewegung senkrecht zur Transportrichtung, also das Herabrollen der Bahnrolle, beispielsweise bei Kurvenfahrt, durch Klemmen der Bahnrolle zusätzlich verhindert werden kann.

In einer bevorzugten Ausführungsform weist die Kippsicherung einen ersten Schenkel und einen zweiten Schenkel auf. Der erste Schenkel kann sich dabei entlang einer Stirnseite der Bahnrolle erstrecken, wobei sowohl Kontakt zwischen Schenkel und Stirnseite als auch eine berührungslose Anordnung von Stirnseite und Schenkel zueinander denkbar ist. Auch kann sich dieser Schenkel dabei im Wesentlich horizontal oder vertikal erstrecken. Grundsätzlich ist eine beliebige Ausrichtung des Schenkels vorstellbar, solange dieser im Bereich der Stirnseite der Bahnrolle angeordnet ist. Der zweite Schenkel der Kippsicherung erstreckt sich dabei im Wesentlichen horizontal, vorzugsweise in Richtung der Transportrichtung. Vorzugsweise wird die Kippsicherung über diesen zweiten Schenkel an die Auflagefläche des Transportwagens gebunden. Eine Ausrichtung des zweiten Schenkels von der Bahnrolle weg ist ebenso denkbar wie eine Erstreckung unterhalb der Bahnrolle, wobei die Bahnrolle auf dem zweiten Schenkel zu liegen kommt.

Ferner können zumindest zwei Schenkel der Kippsicherung mit einem Drehgelenk miteinander verbunden werden, so dass die Schenkel der Kippsicherung zueinander verschwenkt werden können, um beispielsweise die Kippsicherung in der Auflage des Transportwagens zu versenken oder zumindest einen Schenkel beim Platzieren einer Bahnrolle auf der Auflage in Richtung einer Stirnseite der Bahnrolle zu verschwenken. So kann das Drehgelenk eine Schwenkachse sein, die insbesondere horizontal angeordnet ist.

Auch ist es denkbar, dass die Kippsicherung oder zumindest Teile davon translatorisch entlang einer Stirnseite der Bahnrolle bewegbar sind. Vorzugsweise findet eine Bewegung in vertikaler Richtung statt, es ist jedoch auch denkbar, dass die Bewegung in horizontaler Richtung oder sowohl horizontale als auch vertikale Komponenten aufweist. Dies kann beispielsweise durch ein Ein- oder Ausfahren der Kippsicherung aus der Auflagefläche des Transportwagens geschehen. So kann die Kippsicherung etwa ein Bolzen oder eine versenkbare Wand sein, die, sofern gewünscht aus der Auflage des Transportwagens ausfährt und somit die Bahnrolle an der Stirnseite sichert. Dabei ist sowohl eine Kontaktierung der Kippsicherung mit der Stirnseite der Bahnrolle als auch eine beabstandete Anordnung zwischen Stirnseite der Bahnrolle und Kippsicherung denkbar.

Falls die Kippsicherung nur in bestimmten Fällen zum Einsatz kommen soll, beispielsweise wenn auch nicht kippgefährdete Bahnrollen mit ausreichender Bahnbreite transportiert werden, so kann die Kippsicherung so verstellbar sein, dass sie in einer nicht sichernden Stellung, also in einer Ruhelage nicht über die Auflage hinausragt. So kann sie beim Transportieren ausreichend breiter Bahnrollen versenkt werden und nur zum Transportieren von Bahnrollen mit zu geringer Breite zum Einsatz kommen. Dabei ist insbesondere ein planes Abschließen der Kippsicherung mit der Auflage vorteilhaft, da so kein störender Vorstand oder Rücksprung an der Auflagefläche des Transportwagens erzeugt wird.

Ferner kann die Transportvorrichtung auf jeder Stirnseite einer zu transportierenden Bahnrolle eine Kippsicherung aufweisen oder auch zum Transport mehrerer Bahnrollen geeignet sein, wobei an zumindest einer Stirnseite zumindest einer Bahnrolle eine Kippsicherung an der Auflage des Transportwagens angeordnet ist.

Die Erfindung wird anhand der beiliegenden Figuren nicht mehr erläutert, wobei sie die hierin beschriebenen Merkmale einzeln sowie in jedweder sinnvoller Kombination umfassen kann.

Es zeigen:
- Figur 1: einen Transportwagen mit einer beidseitig angeordneten, verschraubten Kippsicherung
- Figur 2: Transportwagen mit einer aus der Auflage hervorschwenkbaren beidseitigen Kippsicherung
- Figur 3: Transportwagen mit einer beidseitig aus der Auflagefläche heraus verschiebbaren Kippsicherung
- Figur 4: Transportwagen mit beidseitig aus der Auflage heraus verschwenkbarer, zur Bahnrolle beabstandeter Kippsicherung
- Figur 5: Transportwagen mit translatorisch verschiebbarer Kippsicherung, wobei die Bahnrolle auf einem Schenkel der Kippsicherung angeordnet ist
- Figur 6: Transportwagen aus Figur 6, wobei die Schenkel der Kippsicherung versenkbar und zusätzlich zueinander verschwenkbar sind
- Figur 7: Transportwagen mit beidseitig angeordneter translatorisch verschiebbarer Kippsicherung mit von der Bahnrolle wegweisenden Schenkeln.

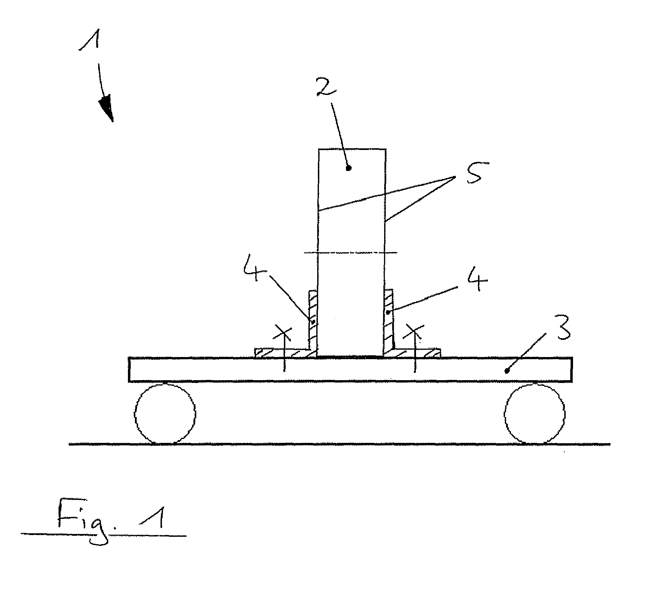

In Figur 1 ist ein schematisch gezeichneter Transportwagen gezeigt, der eine Auflagefläche 3 aufweist, auf der eine Bahnrolle 2 mit Stirnseiten 5 transportiert werden kann. Die Rotationsachse der Bahnrolle 2 weist dabei entlang der Transportrichtung des Transportwagens 1. Ferner sind auf der Auflagefläche 3 auf beiden Seiten 5 der Bahnrolle 2 winkelförmige Kippsicherungen 4 angeordnet, die mit der Auflagefläche 3 verschraubt sind. Dadurch wird die Bahnrolle 2 gegen in Transportrichtung des Wagens 1 auftretende Kräfte durch die nach oben stehenden Teile der Kippsicherungen 4 gegen Verkippen in der Zeichenebene gesichert, da die nach oben stehenden Teile der Kippsicherungen 4 beidseitig an beiden Stirnflächen 5 der Transportrolle 2 anliegen und somit Kräfte aufnehmen können.

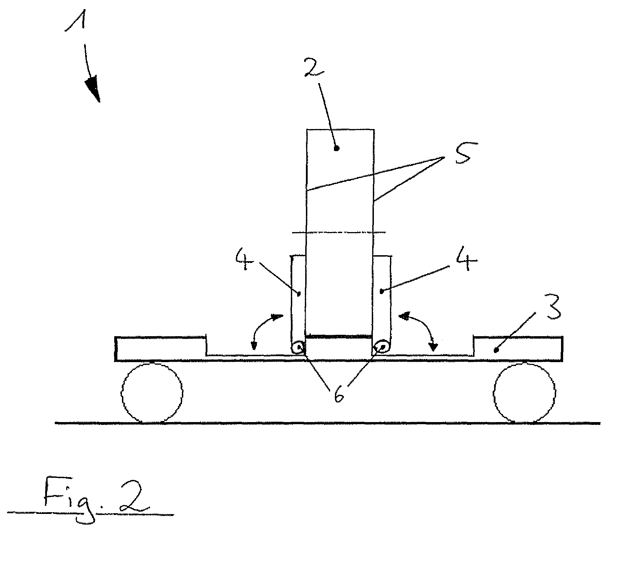

Figur 2 zeigt einen Transportwagen 1, bei dem an beiden Seiten 5 der Bahnrolle 2 auf der Auflagefläche 3 Kippsicherungen 4 anliegen. Diese Kippsicherungen 4 sind hierbei jeweils durch eine Schwenkachse 6 mit der Auflagefläche 3 des Transportwagens 1 schwenkbar verbunden. Die Schwenkachsen verlaufen dabei horizontal und stehen senkrecht auf die Transportrichtung des Transportwagens 1. Ferner sind die Kippsicherungen 4 durch Verschwenken in die Auflagefläche 3 versenkbar. In diesem Falle ragt keine der Kippsicherungen 4 über die Auflagefläche 3 hinaus. Mit dem Transportwagen 1 können dann beispielsweise Bahnrollen transportiert werden, die aufgrund ihrer Breite keine Kippsicherung benötigen und ohnehin aufgrund ihrer Breite nicht durch diese gesichert werden könnten, da sie sich über diese hinaus erstrecken würde.

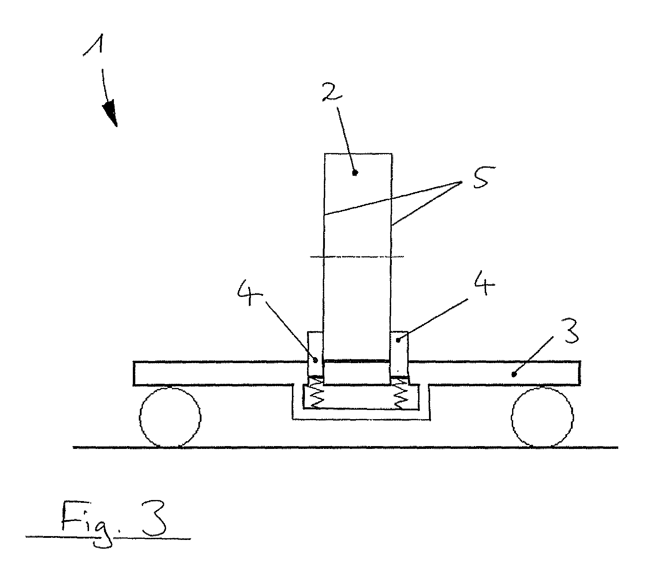

Figur 3 zeigt einen Transportwagen 1, bei dem zu beiden Seiten 5 der Bahnrolle 2 Kippsicherungen 4 in Form von vertikal verschiebbaren Bolzen angeordnet sind. Diese Bolzen 4 können innerhalb der Auflagefläche 3 bündig versenkt werden und bei Bedarf aus dieser beispielsweise durch Federkraft ausgefahren werden. Dabei ist nicht zwingend eine Federkraft notwendig, vielmehr können auch andere Antriebsvorrichtungen für die Bolzen 4 vorgesehen sein, beispielsweise ein hydraulischer oder elektromotorischer Antrieb, der die Bolzen 4 relativ zur Auflagefläche 3 aus- bzw. einfährt.

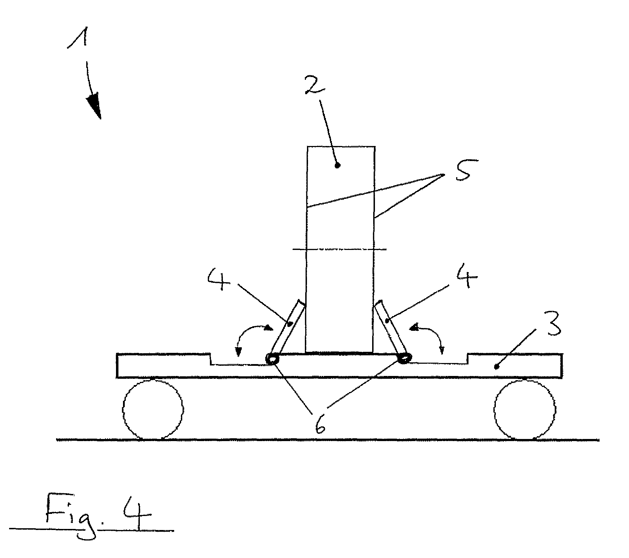

Figur 4 zeigt einen Transportwagen 1, bei dem die Kippsicherungen 4 zu beiden Seiten der Transportrolle 2 beabstandet sind. Vorteil hierbei ist, dass Bahnrollen mit unterschiedlichen Rollenbreiten gegen Verkippen gesichert werden können. Hierbei liegen die Kippsicherungen 4 lediglich bei einer Bahnrolle mit maximaler Rollenbreite flächig an den Seiten 5 der Bahnrolle 2 an, wobei sie bei Rollen mit geringerer Rollenbreite lediglich linienhaft an den Stirnseiten 5 anliegen. Dabei sind die Kippsicherungen 4, wie schon zu Figur 2 beschrieben, bündig innerhalb der Auflagefläche 3 des Transportwagens 1 durch Verschwenken um die Schwenkachsen 6 versenkbar.

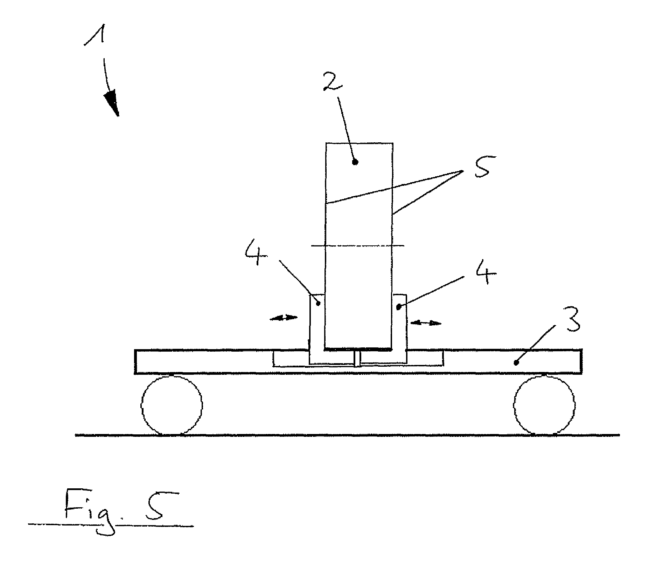

Figur 5 zeigt einen Transportwagen 1, bei dem zu beiden Seiten 5 einer Bahnrolle 2 die Kippsicherungen 4 translatorisch verschiebbar sind. Somit können Bahnrollen unterschiedlicher Durchmesser gleichermaßen von den Kippsicherungen 4 gegen Verkippen gesichert werden, wobei diese stets flächig an den Seiten 5 der Bahnrolle 2 anliegen. Ferner ist zu sehen, dass die sich horizontal erstreckenden Schenkel der Kippsicherungen 4 bündig mit der Auflagefläche 3 abschließen und die Bahnrolle 2 an ihrer Umfangsfläche an diesen Schenkel und nicht an der Auflagefläche 3 aufliegt. Die Kippsicherungen 4 können dabei zusätzlich gegen andere als die gezeigte translatorische Bewegung, beispielsweise durch eine Schwalbenschwanzführung gesichert werden oder aber auch lose in die Ausnehmung der Auflagefläche 3 eingelegt werden, um ein Kippen der Bahnrolle 2 zu verhindern.

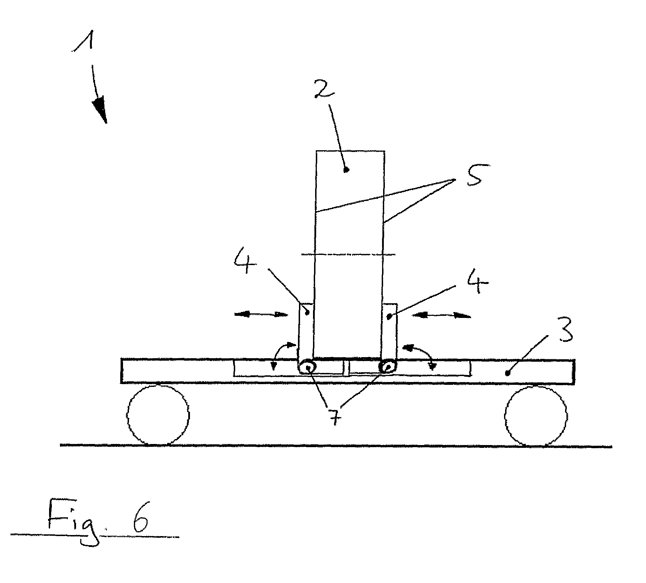

Figur 6 zeigt einen Transportwagen 1 mit Kippsicherungen 4 ähnlich wie die Kippsicherungen aus Figur 5, wobei die Schenkel der Transportsicherungen 4 um horizontal liegende senkrecht auf die Transportrichtung stehende Achse 7 relativ zueinander verschwenkbar sind. Somit lassen sich die Kippsicherungen gänzlich in der Auflagefläche 3 senken, so dass wiederum eine bündige Auflagefläche 3 entsteht, auf der Bahnrollen transportiert werden können, die einer Kippsicherung nicht bedürfen.

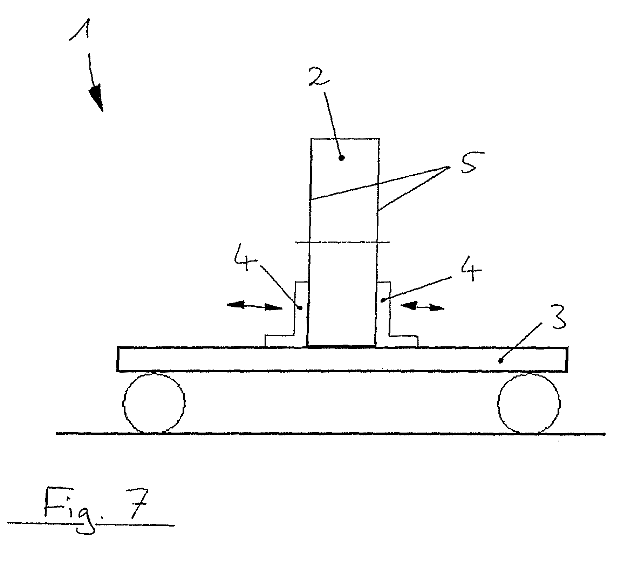

Figur 7 zeigt einen Transportwagen mit Kippsicherungen 4 ähnlich den Kippsicherungen aus Figur 1, wobei diese jedoch translatorisch verschiebbar sind. Der Vorteil gegenüber der Ausführungsform aus Figur 1 besteht darin, dass Bahnrollen mit verschiedenen Rollenbreiten gesichert werden können, wobei die Kippsicherungen 4 stets an den Seitenflächen 5 der Bahnrolle 2 flächig anliegen.

## Patentansprüche

1. Transportvorrichtung für die Zuführung oder Abführung einer Bahnrolle zu oder von einem Rollenwechsler einer Rollendruckmaschine, die Transportvorrichtung umfassend
a) einen Transportwagen mit einer Auflage
b) und eine Kippsicherung, die über die Auflage ragt und im Falle einer auf der Auflage liegenden Bahnrolle einer Stirnseite der Bahnrolle zugewandt ist.

2. Transportvorrichtung nach dem vorhergehenden Anspruch, **dadurch gekennzeichnet, dass** die Kippsicherung an dem Transportwagen ortsfest oder axial verstellbar angeordnet ist.

3. Transportvorrichtung nach einem der vorhergehenden Ansprüche, **dadurch gekennzeichnet, dass** die Kippsicherung ein Winkelstück ist und einen aufragenden ersten Schenkel und einen dazu winkelig weisenden, zumindest im Wesentlichen axialen zweiten Schenkel aufweist und dass der zweite Schenkel unter die Bahnrolle ragt oder vorzugsweise von der Bahnrolle weg weist.

4. Transportvorrichtung nach einem der vorhergehenden Ansprüche, **dadurch gekennzeichnet, dass** die Kippsicherung um eine Klappachse gegen die Stirnseite der Bahnrolle klappbar mit dem Transportwagen verbunden ist.

5. Transportvorrichtung nach dem vorhergehenden Anspruch, **dadurch gekennzeichnet, dass** die Kippsicherung mittels Federkraft in Richtung auf die Stirnseite der Bahnrolle beaufschlagt wird.

6. Transportvorrichtung nach einem der Ansprüche 1 bis 5, **dadurch gekennzeichnet, dass** die Kippsicherung (4) mit einer Kraft beaufschlagt wird, die eine Bewegung zumindest eines Teils der Kippsicherung (4) entlang der oder in Richtung auf die Stirnseite (5) der Bahnrolle (2) zu bewirkt.

7. Transportvorrichtung nach dem Anspruch 6, **dadurch gekennzeichnet, dass** die Kraft eine Vorspannkraft, insbesondere eine Federkraft, oder zumindest ein Teil der Gewichtskraft der Bahnrolle (2) ist.

8. Transportvorrichtung nach einem der Ansprüche 1 bis 7, **dadurch gekennzeichnet, dass** die Kippsicherung (4) einen ersten Schenkel, der sich an einer Stirnseite (5) der Bahnrolle (2), insbesondere an einer Stirnseite (5) der Bahnrolle (2) anliegend erstreckt, und einen zweiten Schenkel umfasst, der sich im wesentlichen horizontal von der Bahnrolle (2) weg oder unter die Bahnrolle (2), insbesondere an der Umfangsfläche der Bahnrolle (2) anliegend erstreckt.

9. Transportvorrichtung nach Anspruch 8, **dadurch gekennzeichnet, dass** die Schenkel der Kippsicherung (4) in einem Drehgelenk miteinander verbunden, insbesondere um eine horizontale Schwenkachse (7) zueinander schwenkbar sind.

10. Transportvorrichtung nach einem der Ansprüche 1 bis 7, **dadurch gekennzeichnet, dass** die Kippsicherung (4) translatorisch in vertikaler Richtung entlang der Stirnseite (5) der Bahnrolle (2) verschiebbar ist, wobei die Kippsicherung (4) die Stirnseite (5) während der Bewegung kontaktiert oder einen geringen Abstand zu der Stirnseite (5) aufweist.

11. Transportvorrichtung nach einem der Ansprüche 1 bis 10, **dadurch gekennzeichnet, dass** die Kippsicherung (4) nicht über die Auflage (3) ragend, insbesondere mit der Auflage (3) plan abschließend, verstellbar ist.

12. Transportvorrichtung nach einem der Ansprüche 1 bis 11, **dadurch gekennzeichnet, dass** auf jeder Stirnseite (5) der Bahnrolle eine Kippsicherung (4) angeordnet ist.

13. Transportvorrichtung nach einem der Ansprüche 1 bis 12, **dadurch gekennzeichnet, dass** auf dem Transportwagen (1) mindestens eine Bahnrolle (2) angeordnet ist, wobei an zumindest einer Stirnseite (5) zumindest einer Bahnrolle (2) eine Kippsicherung (4) angeordnet ist.
